# EUROPÄISCHE PATENTSCHRIFT

(11) **EP 3 127 675 B1**
(45) Veröffentlichungstag und Bekanntmachung des Hinweises auf die Patenterteilung: **27.05.2020**
(21) Anmeldenummer: 16174465.1
(22) Anmeldetag: 14.06.2016
(51) Int. Cl.: B29C 31/00, B29C 33/00, B29C 45/32, B29C 45/26, B29C 45/14, B29C 49/24

(54) **IML-SPRITZGUSSTEILE-HANDHABUNGSVORRICHTUNG SOWIE BETRIEBSVERFAHREN**
IML INJECTION MOULDING PARTS HANDLING DEVICE AND METHOD OF OPERATION
DISPOSITIF DE MANIPULATION DE PIÈCES INJECTÉES IML ET PROCÉDÉ D'EXPLOITATION

(30) Priorität: 03.08.2015 DE 102015112720
(43) Veröffentlichungstag der Anmeldung: 08.02.2017
(73) Patentinhaber: Waldorf Technik GmbH & Co. KG, 78234 Engen (DE)
(72) Erfinder: CZIZEGG, Wolfgang, 78256 Steisslingen (DE)
(74) Vertreter: Patentanwälte Behrmann Wagner PartG mbB

(56) Entgegenhaltungen:
- EP-A1- 1 745 911
- EP-A2- 1 914 059
- WO-A2-2005/005126

## Beschreibung

Die Erfindung betrifft eine IML-(ln-Mold-Labeling)Spritzgussteile-Handhabungsvorrichtung gemäß Anspruch 1, mit einer ein Etagenspritzgusswerkzeug (Etagenwerkzeug bzw. Stack-Mold) aufweisenden Spritzgussvorrichtung mit Magazinmitteln zum Bereitstellen von IML-Labeln sowie mit Handhabungsmitteln zum Überführen der Label von den Magazinmitteln zu dem Etagenspritzgusswerkzeug sowie zum Einlegen der IML-Label in Form-Matrizen (Nester) einer Mittelplatte des Werkzeugs und zum Entnehmen von fertigen IML-Spritzgussteilen, d.h. mit hinterspritzten Labeln versehenen IML-Spritzgussteilen und zum Überführen von diesen zu, vorzugsweise Förderbänder umfassenden, Aufnahmemitteln. Konkret betrifft die Erfindung eine IML-Spritzgussteile-Handhabungsvorrichtung mit einer Spritzgussvorrichtung umfassend ein Etagenwerkzeug, aufweisend eine Mittelplatte mit einer ersten Mittelplattenseite und einer von der ersten Mittelplattenseite abgewandten zweiten Mittelplattenseite, jeweils aufweisend eine Mehrzahl von Form-Matrizen, die von der Mittelplatte her anspritzbar sind, sowie aufweisend eine der ersten Mittelplattenseite zugeordnete und dieser gegenüberliegende erste Außenplatte und eine der zweiten Mittelplattenseite zugeordnete und dieser gegenüberliegende zweite Außenplatte, wobei die Außenplatten entlang einer, bevorzugt horizontalen, durch die Mittelplatte und die Außenplatten verlaufenden Öffnungsachse des Etagenwerkzeugs beabstandet sind und die Mittelplatte zwischen sich aufnehmen, und wobei die Außenplatten jeweils mehrere Kerne zum Einführen in die jeweils gegenüberliegenden Form-Matrizen der zugehörigen Mittelplattenseite aufweisen, mit entlang einer sich senkrecht zur Öffnungsachse erstreckenden, bevorzugt horizontalen, vorzugsweise (entlang der Öffnungsachse beabstandet) mittig, durch die Mittelplatte hindurch verlaufenden Seitenachse von dem Etagenwerkzeug beabstandeten ersten und zweiten Magazinmitteln, die entlang der Öffnungsachse voneinander beabstandet sind, und mit entlang der Seitenachse zwischen den Magazinmitteln und dem Etagenwerkzeug angeordneten, bevorzugt als Transportmittel ausgebildete Aufnahmemittel zur Aufnahme von fertigen IML-Spritzgussteilen, mit zum gleichzeitigen Einlegen von Labeln in die Form-Matrizen der ersten Mittelplattenseite sowie zur Übernahme von fertigen IML-Spritzgussteilen (d.h. ein hinterspritztes Label aufweisenden) von den Kernen der ersten Außenplatte ausgebildeten, eine Mehrzahl von mit den Form-Matrizen der ersten Mittelplattenseite korrespondierenden Einlegekernen aufweisenden ersten Transfermitteln, die entlang der Seitenachse zwischen einer ersten Außenposition im Bereich der Aufnahmemittel und einer ersten Innenposition in einem Öffnungsbereich zwischen der ersten Mittelplattenseite und der ersten Außenplatte verstellbar sind, mit zum gleichzeitigen Einlegen von Labeln in die Form-Matrizen der zweiten Mittelplattenseite sowie zur Übernahme von fertigen IML-Spritzgussteilen, (d.h. ein hinterspritztes Label aufweisenden Spritzgussteilen) insbesondere Bechern, von den Kernen der zweiten Außenplatte ausgebildeten, eine Mehrzahl von mit den Form-Matrizen der zweiten Mittelplattenseite korrespondierenden Einlegekernen aufweisenden zweiten Tranfermitteln, die entlang der Seitenachse zwischen einer zweiten Außenposition im Bereich der Aufnahmemittel und einer zweiten Innenposition in einem Öffnungsbereich zwischen der zweiten Mittelplattenseite und der zweiten Außenplatte verstellbar sind, mit ersten Labeltransfermitteln, die zur gleichzeitigen Übernahme einer Mehrzahl von (separaten), bevorzugt in einer gemeinsamen Magazinebene angeordneten, Labeln aus den ersten Magazinmitteln ausgebildet sind, und die aus einer ersten Übernahmeposition zwischen den ersten und den zweiten Magazinmitteln entlang der Seitenachse in eine der ersten Außenposition entlang der Öffnungsachse gegenüberliegende erste Labelübergabeposition verstellbar sind, und mit zweiten Labeltransfermitteln, die zur gleichzeitigen Übernahme einer Mehrzahl von (separaten), bevorzugt in einer gemeinsamen Magazinebene angeordneten, Labeln aus den zweiten Magazinmitteln ausgebildet sind, und die aus einer zweiten Übernahmeposition zwischen den ersten und den zweiten Magazinmitteln entlang der Seitenachse in eine der zweiten Außenposition entlang der Öffnungsachse gegenüberliegende zweite Labelübergabeposition verstellbar sind.

Ferner betrifft die Erfindung ein Betriebsverfahren für eine solche Vorrichtung gemäß Anspruch 8, wobei von dem in der ersten Übernahmeposition befindlichen ersten Labeltransfermitteln gleichzeitig eine Mehrzahl von Labeln aus den ersten Magazinmitteln übernommen werden und, bevorzugt gleichzeitig, von den in der zweiten Übernahmeposition befindlichen zweiten Labeltransfermitteln gleichzeitig eine Mehrzahl von Labeln aus den zweiten Magazinmitteln übernommen werden und dass die ersten und die zweiten Labeltransfermittel, bevorzugt gleichzeitig, mit den Labeln an die erste bzw. zweite Labelübergabeposition verstellt werden und dass dort, insbesondere gleichzeitig, mittels der ortsfesten ersten und Labelübergabemittel die Label gemeinsam von den ersten bzw. zweiten Labeltransfermitteln auf die Einlegekerne in der ersten bzw. zweiten Außenposition befindlichen Transfermittel, übergeben und dabei um die Einlegekerne umgeformt werden, und dass dann die ersten und die zweiten Transfermittel entlang der Seitenachse zur ersten bzw. zweiten Innenposition verstellt werden und dort die Label in die Form-Matrizen der ersten bzw. zweiten Mittelplattenseite eingelegt und die fertigen IML-Spritzgussteile von einem vorhergehenden Schuss von den Kernen der ersten bzw. zweiten Außenplatte übernommen werden und danach die ersten und zweiten Transfermittel zurück zur ersten bzw. zweiten Außenposition verstellt werden, an denen die fertigen IML-Spritzgussteile an die Aufnahmemittel übergeben werden.

In-Mold-Spritzgussverfahren mit eine einige Trennebene aufweisenden Einfachwerkzeugen sind hinlänglich bekannt. Dabei wird ein in der Regel bedrucktes oder strukturiertes Label, insbesondere eine Folie in eine Form-Matrize (Nest) eines Spritzgusswerkzeuges eingelegt, wobei das Werkzeug bzw. die Form verschlossen wird mit einem in die Form-Matrize einführbaren Kern, wobei dann der Bereich zwischen Kern und Form-Matrize bzw. Label mit Kunststoff ausgespritzt und auf diese Weise das Label hinterspritzt wird.

In der Spritzgusstechnologie sind allgemein sogenannte Etagenspritzgusswerkzeuge, auch Etagenwerkzeuge oder Stack-Mold-Werkzeuge genannt, bekannt, die eine Mittelplatte mit zwei voneinander abgewandten Mittelplattenseiten aufweisen, sowie zwei den Mittelplatten zugeordnete und relativ zur Mittelplatte entlang einer Öffnungsachse verstellbaren Außenplatten. Üblicherweise sind dabei in den Mittelplattenseiten die Form-Matrizen angeordnet und auf den Außenplatten, der jeweiligen Mittelplattenseite zugewandt die zu den Form-Matrizen korrespondierenden Kerne. Die Anordnung der Form-Matrizen in der Mittelplatte hat den Vorteil, dass die von den Kernen und den Form-Matrizen gebildeten Spritzgussformen von außen her bzw. vonseiten der Mittelplatte her angespritzt werden können, so dass ein Anspritzpunkt nicht auf der Innenseite sondern auf der Außenseite eines bevorzugt als Becher ausgebildeten Spritzgussteils angeordnet ist, was für viele Anwendungen von Vorteil ist, insbesondere in der Lebensmittelindustrie, wo man den direkten Kontakt zwischen Anspritzpunkt und Lebensmittel vermeiden möchte. Etagenwerkzeuge haben gegenüber einfachen Spritzgusswerkzeugen den Vorteil, dass diese im Verhältnis zu der Gesamtanzahl von Form-Matrizen-Kernkombination einen geringen Raumbedarf aufweisen und darüber hinaus die Schließkraft der Außenplatten ineinander entgegengesetzte Richtungen bzw. aufeinanderzuwirkt, wodurch sich die Schließkräfte im Wesentlichen kompensieren und somit bei einem zwei Trennebenen aufweisenden Etagenwerkzeug in der Regel keine höhere Schließ- bzw. Zuhaltekraft aufgebracht werden muss als bei einem Einfachwerkzeug mit nur einer Trennebene.

Aus der WO 2005/005126 A2 ist eine IML-Spritzgussteile-Handhabungsvorrichtung bekannt, bei welcher die Label in den Magazinen horizontal ausgerichtet sind und in dieser horizontalen Ausrichtung von Labeltransfermitteln transferiert werden. Die Übergabe der Label erfolgt nicht unmittelbar auf die Kerne. Vielmehr werden die Label in eine Vorformeinrichtung übergeben, in der sie zylindrisch oder konisch geformt werden und aus der sie von den Kernen übernommen werden. Insbesondere bei senkrecht zur Seitenachse langgestreckten Labeln ist der Raumbedarf für den Labeltransfer hoch.

Ausgehend von dem vorgenannten Stand der Technik liegt der Erfindung die Aufgabe zugrunde, eine für ein IML-Spritzgussverfahren ausgelegte bzw. geeignete Spritzgussteile-Handhabungsvorrichtung anzugeben, die eine Spritzgussvorrichtung mit Etagenspritzgusswerkzeug umfasst, wobei die IML-Spritzgussteile, insbesondere Becher, besonders bevorzugt für die Lebensmittelindustrie oder Pharmaindustrie von außen, insbesondere bodenseitig angespritzt werden sollen, also derart, dass sich ein Anspritzpunkt außerhalb eines Spritzgussteileinnenraums, insbesondere Becherinnenraums befindet.

Ferner soll ein Betriebsverfahren für eine solche IML-Spritzgussteile-Handhabungsvorrichtung angegeben werden.

Diese Aufgabe wird hinsichtlich der IML-Spritzgussteile-Handhabungsvorrichtung mit den Merkmalen des Anspruchs 1 gelöst.

Hinsichtlich des Verfahrens wird die Aufgabe mit den Merkmalen des Anspruchs 8 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Bisher ist der Einsatz von Etagenspritzgusswerkzeugen bzw. Vorrichtungen für IML-Prozesse nicht üblich, bei dem eine Anspritzung der Spritzgussteile, insbesondere Becher, von außen gefordert ist, wahrscheinlich weil nicht nur eine einzige Magazinanordnung relativ zu dem Etagenspritzgusswerkzeug angeordnet werden muss, wie dies bei Einfachwerkzeugen mit einer Trennebene der Fall ist, sondern gleich zwei solcher Magazinanordnungen, um die Form-Matrizen jedes Werkzeugabschnitts mit Labeln versorgen zu können. Eine Möglichkeit bestünde grundsätzlich darin, die Form-Matrizen (Nester) auf den Außenplatten anzuordnen und die ersten und zweiten Magazinmittel benachbart zu den Außenplatten bzw. neben diesen Außenplatten entlang der Seitenachse beabstandet zu den Mittelplatten anzuordnen und somit die Label nach innen bzw. zur Seitenachse hin aus den Labeln zu entnehmen, zwischen die Außenplatten und die Mittelplatte zu verstellen und dann wieder nach außen, d.h. von der Seitenachse weg in die Form-Matrizen einzulegen. Bei einer solchen Anordnung besteht jedoch das Problem, dass die herzustellenden IML-Spritzgussteile bzw. Becher mittelplattenseitig bzw. von innen her angespritzt werden müssten, was jedoch nicht erwünscht ist. Darüber hinaus ist bei einer solchen Anordnung noch nicht das Problem der Anordnung von vorzugsweise zwei Förderbänder umfassenden Aufnahmemitteln zur Aufnahme und bevorzugt zum Abtransport von fertigen IML-Spritz-gussteilen, insbesondere Bechern, bei gleichzeitiger Gewährleistung kurzer Taktzeigen gelöst. Wünschenswert wäre eine Anordnung der ersten und zweiten Magazinmittel entlang der Seitenachse benachbart zur Mittelplatte, so dass aus den Magazinmitteln entlang der Öffnungsachse von der Seitenachse weg Label entnommen, in den Bereich zwischen die Außenplatten und der Mittelplatte verstellt zu werden, um dann nach innen bzw. zur Seitenachse hin in die dann mittelplattenseitigen Form-Matrizen eingelegt werden zu können. Jedoch ist der Raum zur Aufstellung von ersten und zweiten Magazinmitteln in einem Bereich seitlich benachbart zur Mittelplatte (d.h. auf der Seitenachse) nicht ausreichend, wenn gleichzeitig gewährleistet werden soll, dass entsprechende Transfermittel parallel zur Seitenachse aus einem Bereich benachbart zu den Magazinmitteln in einen Bereich zwischen die Trennebenen des Etagenwerkzeugs verfahren werden sollen. Darüber hinaus wäre selbst dann nicht das Problem der Anordnung von vorerwähnten Aufnahmemitteln gelöst.

Um zu gewährleisten, dass die herzustellenden IML-Spritzgussteile, insbesondere einen Boden und eine sich von diesem weg erstreckende Umfangswand aufweisende Becher von der Außenseite, insbesondere von unterhalb des Becherbodens her angespritzt werden sind erfindungsgemäß die Form-Matrizen bzw. Nester in den voneinander abgewandten Mittelplattenseiten der Mittelplatte angeordnet. Anstatt die ersten und zweiten Magazinmittel einfach nur entlang der durch die Mittelplatte mittig (bezogen auf die Erstreckung entlang der Öffnungsachse) verlaufenden Seitenachse von der Mittelplatte zu beabstanden und die Magazinmittel auf der Seitenachse, d.h. seitlich neben der Mittelplatte anzuordnen ist weiter vorgesehen, die ersten und zweiten Magazinmittel zwar entlang der Seitenachse von dem Etagenspritzgusswerkzeug zu beabstanden, jedoch mit Abstand entlang der Öffnungsachse zu der Seitenachse anzuordnen, insbesondere derart, dass die Label entlang der Öffnungsachse in Richtung der die Öffnungsachse senkrecht schneidenden Seitenachse hin übergeben bzw. von geeigneten Labeltransfermitteln übernommen werden können. Gleichzeitig wird erfindungsgemäß eine mehrstufige Übergabe der Label ausgehend von den Magazinmitteln bis hin zu den Nestern bzw. Form-Matrizen der Mittelplatte realisiert und zudem sind entlang der Seitenachse zwischen dem Etagenwerkzeug und den Magazinmitteln Aufnahmemittel angeordnet, die zur Aufnahme von fertigen IML-Spritzgussteilen, insbesondere Bechern dienen. Im Rahmen der mehrstufigen Übergabe bzw. des mehrstufigen Handlings der Label ist vorgesehen, erste und zweite, vorzugsweise gemeinsam entlang der Seitenachse verstellbare Labeltransfermittel vorzusehen, auf die mithilfe geeigneter Übergabemittel, wie diese beispielsweise in der DE 11 2005 002 486 B4 der Anmelderin beschriebenen sind, insbesondere Translations- und Schwenkvorrichtungen, übergeben werden können. Wesentlich ist dabei, dass bei einer solchen Übergabe nicht nur der Transfer eines einzelnen Labels erfolgt, sondern ein ganzes Labelfeld umfassend mehrere Label aus den ersten Magazinmittel auf die ersten Labeltransfermittel übergeben wird und ebenso ein ganzes Labelfeld von den zweiten Magazinmitteln auf die zweiten Labeltransfermittel. Bevorzugt erfolgt die Übergabe beider Labelfelder auf die ersten und zweiten Labeltransfermittel gleichzeitig. Die Labeltransfermittel sind dabei derart ausgestaltet und angeordnet, dass sie zwischen einer benachbart zu den Magazinmittel angeordneten, jeweiligen Übernahmeposition, vorzugsweise ausschließlich translatorisch entlang der Seitenachse bis zu einer jeweiligen Labelübergabeposition verstellt werden können, die im Bereich der Aufnahmemittel angeordnet ist. Zur Realisierung der mehrstufigen Übergabe bzw. des mehrstufigen Labelhandlings sind nun ferner erfindungsgemäß erste und zweite Transfermittel vorgesehen, die alternativ mit separaten oder mit einem gemeinsamen Antrieb, vorzugsweise ausschließlich translatorisch verstellbar sind zwischen einer Innenposition innerhalb des geöffneten Etagenwerkzeugs, also einem Bereich zwischen Außenplatte und Mittelplatte sowie einer Außenposition im Bereich der Aufnahmemittel, die korrespondiert bzw. gegenüberliegt der jeweiligen Labelübergabeposition. Wesentlich ist nun, dass die auf den Labeltransfermitteln angeordneten Labels nicht direkt von den Labeltransfermitteln auf die Einlegekerne der Transfermittel übergeben werden, sondern dass zur Realisierung dieser Übergabe ortsfeste, d.h. nicht zusammen mit den Labeltransfermitteln verstellbare erste und zweite Labelübergabemittel vorgesehen sind, und zwar im Bereich der Aufnahmemittel, wobei die Labelübergabemittel derart ausgebildet sind, dass diese gleichzeitig die gemeinsamen Label der zugehörigen Labeltransfermittel gleichzeitig übernehmen und auf die Kerne der zugehörigen ersten bzw. zweiten Transfermittel übergeben und die Labels um die Kerne umgeformt werden, was beispielsweise durch Anlegen von Unterdruck an die Einlegekerne und/oder elektrostatisch realisiert werden kann.

Erfindungsgemäß handelt es sich bei den ersten und zweiten Labelübergabemittel um Schwenkeinrichtungen, die die Label aus der, bevorzugt zumindest näherungsweise vertikalen Orientierung von den Labeltransfermitteln übernehmen und verschwenken, insbesondere um eine sich jeweils parallel zur Seitenachse erstreckende Schwenkachse. Sobald die Label auf die Einlegekerne der ersten und zweiten Transfermittel überführt wurden, verfahren die ersten und zweiten Transfermittel mit den an den Einlegekernen gehaltenen Labeln aus der jeweiligen Außenposition in die jeweilige Innenposition und legen dort, insbesondere durch die Realisierung eines entsprechenden Einlegehubs entlang der Öffnungsachse die Mehrzahl der Label, insbesondere gleichzeitig in die zugehörigen Form-Matrizen (Nester) ein, wobei vor dem Einlegen oder alternativ auch gleichzeitig die fertigen IML-Spritzgussteile, insbesondere Becher von dem vorhergehenden Schuss auf der von den Matrizen abgewandten Seite der Transfermittel von den Kernen der jeweiligen Außenplatte übernommen werden, insbesondere durch die Realisierung eines Entnahmehubs entlang der Öffnungsachse, woraufhin dann die ersten und zweiten Transfermittel wieder entlang der Seitenachse in die jeweilige Außenposition verstellt werden, an welcher die fertigen IML-Spritzgussteile auf/an die Aufnahmemittel übergeben und (neue) Label von den Labeltransfermitteln (die zwischenzeitlich die neuen Labels von den Magazinmitteln antransportiert haben) übernommen werden.

Die erfindungsgemäße Ausgestaltung der IML-Spritzgussteile-Handhabungsvorrichtung hat zum einen den Vorteil, dass, wie erwähnt, die IML-Spritgussteile von der Mittelplatte her angespritzt werden können und darüber hinaus aufgrund der mehrstufigen Übergabe der daraus resultierenden Wegaufteilung erhöhte Taktzahlen realisiert werden können. Auch ist das Problem der Anordnung der Aufnahmemittel in einem Bereich entlang der Seitenachse zwischen dem Einlegewerkzeug und den Magazinmitteln gelöst sowie die Anordnung der Magazinmittel zur Versorgung der Form-Matrizen der Mittelplatte mit Labeln.

Um nun den Bauraumbedarf bzw. den Raumbedarf entlang der Öffnungsachse für die Verstellbewegung der Labeltransfermittel in einem Bereich entlang der Seitenachse benachbart zu der Mittelplatte zu minimieren, ist gemäß der Erfindung mit Vorteil vorgesehen, dass die Label auf den Labeltransfermitteln nicht oder alternativ nur geringfügig zu einer Vertikalebene während der Verstellbewegung der Labeltransfermittel geneigt sind. Bevorzugt weisen die Labeltransfermittel außer ihrer translatorischen Verstellbarkeit entlang der Seitenachse keine Verstellmittel, insbesondere keine Hub- oder Verschwenkmittel zum Verstellen bzw. Verschwenken der Labels auf den Labeltransfermitteln auf, wodurch das Gesamtsystem wesentlich robuster und die Übergaben präziserer gestaltet werden können, was vorteilhaft ist, für ein exaktes Einlegen der Labels in die Form-Matrizen am Ende des Handlings- bzw. Übergabeprozesses. Erfindungsgemäß werden also eine Mehrzahl von Label gleichzeitig aus den ersten und zweiten Magazinmitteln entnommen und mit geeigneten Übergabeeinrichtungen auf die Labeltransfermittel übergeben, derart, dass die gemeinsame Labelflächenerstreckungsebene der Label vertikal ausgerichtet ist oder alternativ nur geringfügig geneigt ist zur Vertikalebene, insbesondere gleich oder weniger als 20°, noch weiter bevorzugt gleich oder weniger als 10°, ganz besonders bevorzugt gleich oder weniger als 5° zur Vertikalebene. Bevorzugt ist nun vorgesehen, dass die Label beim Transfer in die Labelübergabeposition ihren Winkel zur Vertikalebene nicht mehr ändern, sondern aus der einmal eingestellten bzw. übernommenen Winkelposition übernommen und transferiert werden mithilfe der ortsfest im Bereich der Aufnahmemittel angeordneten Labelübergabemittel, insbesondere Schwenkmittel.

Besonders zweckmäßig ist eine Ausgestaltung der Handhabungsvorrichtung bzw. des Betriebsverfahrens, bei denen die Label aus den Magazinmittel entlang der Öffnungsachse in Richtung der Seitenachse auf die Labeltransfermittel übergebbar sind, also quasi nach innen in Richtung der Position der Seitenachse entlang der Öffnungsachse und dass die Label von den Labeltransfermitteln auf die Transfermittel (mithilfe der Labelübergabemittel) entlang der Öffnungsachse in Richtung von der Seitenachse weg übergebbar sind. Anders ausgedrückt erfolgt das Übergeben der Label ausgehend von den Magazinen von außen nach innen und ausgehend von den Labeltransfermitteln auf die Transfermittel von innen nach außen entlang der Öffnungsachse.

Bevorzugt weisen die ersten und zweiten Transfermittel Hubmittel auf, um zum einen eine Bewegung der Einlegekerne entlang der Öffnungsachse zum gleichzeitigen Einlegen einer Vielzahl von Labeln in die mittelplattenseitigen Form-Matrizen zu ermöglichen und/oder um mittels geeigneten Greifern, insbesondere Sauggreifern und/oder mechanischen Greifern eine Hubbewegung entlang der Öffnungsachse in Richtung der jeweiligen Außenplatte zu vollführen, um dort die fertigen IML-Spritzgussteile, insbesondere Becher von den Kernen entnehmen zu können.

Grundsätzlich ist es möglich, die ersten und zweiten Transfermittel mittels eines gemeinsamen Antriebs anzutreiben, wobei die ersten und zweiten Transfermittel hierzu bevorzugt zwei parallele Achsen aufweisen, die entlang der Öffnungsachse miteinander verbunden sind. Alternativ sind den ersten und zweiten Transfermitteln separate, bevorzugt elektronisch synchronisierte oder alternativ unabhängig voneinander angesteuerte insbesondere als Pneumatikantrieb, Hydraulikantrieb oder elektromotorischer Antrieb ausgebildete Antriebe zugeordnet. Grundsätzlich ist es auch denkbar, die ersten und zweiten Labeltransfermittel mit separaten Antrieben zu verstellen. Die ersten und zweiten Labeltransfermittel sind auch bevorzugt als gemeinsame Transfermittel realisiert, die Haltemittel auf zwei voneinander abgewandten Seiten der Seitenachse aufweisen.

Im Hinblick auf die konkrete Ausgestaltung der Aufnahmemittel gibt es unterschiedliche Möglichkeiten. Im einfachsten Fall handelt es sich um einen einzigen oder bevorzugt zwei Schüttgutcontainer. Bevorzugt ist es jedoch, wenn die Aufnahmemittel erste und zweite, bevorzugt jeweils ein Förderband umfassende Fördermittel aufweisen, die die fertigen IML-Spritzgussteile aufnehmen und in einander entgegengesetzte Richtungen, weg von der Seitenachse entlang der Öffnungsachse wegtransportieren. Grundsätzlich ist es auch denkbar ein einziges Förderband vorzusehen, das die fertigen IML-Spritzgussteile in eine gemeinsame Richtung transportiert.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis Fig 3:: unterschiedliche Ansichten einer nach dem Konzept der Erfindung ausgebildeten IML-Spritzgussteile-Handhabungsvor-richtung,
- Fig. 4:: eine Schnittansicht durch die Vorrichtung gemäß Fig. 1 entlang einer sich parallel zur Seitenachse S erstreckenden Achse,
- Fig. 5:: mögliche Ausgestaltungsdetails einer Vorrichtung gemäß Fig. 1, und
- Fig. 6:: eine Detailvergrößerung des Details A aus Fig. 5.

In den Figuren sind gleiche Elemente und Elemente mit der gleichen Funktion mit den gleichen Bezugszeichen gekennzeichnet.

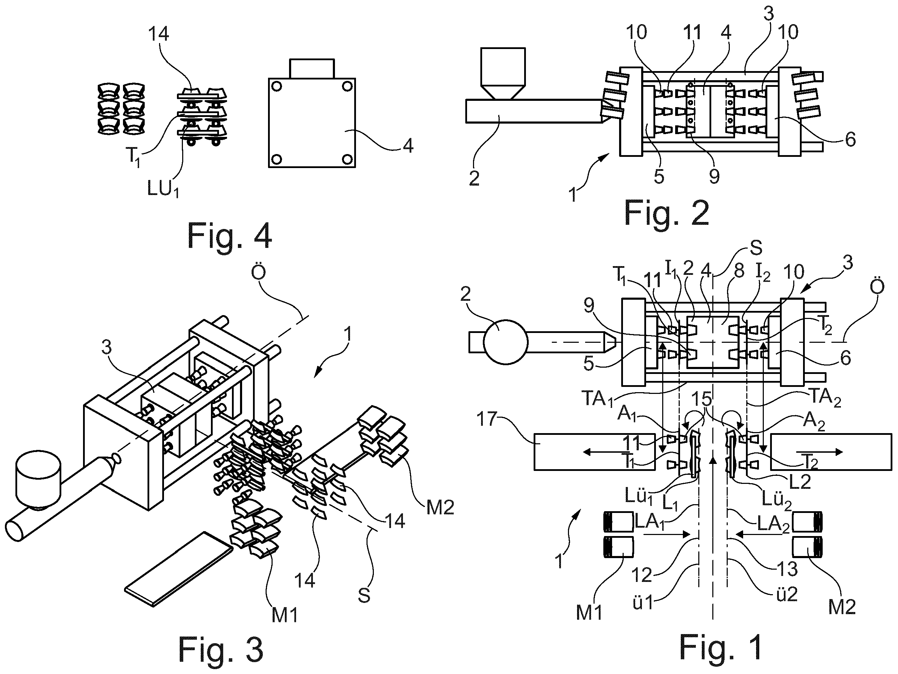

In Fig. 1 ist eine IML-Spritzgussteile-Handhabungsvorrichtung 1 (im Folgenden Vorrichtung 1) in einer Draufsicht von oben gezeigt, wobei die Vorrichtung 1 in Fig. 2 in einer Seitenansicht und in Fig. 3 in einer schrägen perspektivischen Ansicht gezeigt ist und Fig. 4 eine Schnittansicht entlang einer später noch zu erläuternden Seitenachse S zeigt.

Die Vorrichtung 1 umfasst eine Spritzgussvorrichtung 2 mit einem Etagenspritzgusswerkzeug 3. Dieses umfasst wiederum eine sogenannte Mittelplatte 4, die zwischen zwei Außenplatten, nämlich einer ersten Außenplatte 5 und einer zweiten Außenplatte 6 angeordnet ist, wobei eine Relativbewegung der Außenplatten zu der Mittelplatte 4 derart realisiert ist, dass das Etagenspritzgusswerkzeug 3 in an sich bekannter Weise durch klemmende Aufnahme der Mittelplatte 4 zwischen den Außenplatten 5, 6 geschlossen werden kann.

Die Mittelplatte 4 weist eine erste Mittelplattenseite 7 und eine zweite davon abgewandte Mittelplattenseite 8 auf, wobei in den Mittelplattenseiten 7, 8 jeweils eine Mehrzahl von Form-Matrizen 9 (Nestern) angeordnet sind, denen korrespondierende Kerne 10 an den Außenplatten 5, 6 zugeordnet sind, derart, dass die Kerne 10 in die Form-Matrizen 9 verfahren und dadurch die Spritzgussformen geschlossen werden können.

Insgesamt weist das Etagenwerkzeug 3 im Gegensatz zu Einfachwerkzeugen zwei Trennebenen auf, nämlich eine zwischen der ersten Außenplatte 5 und der ersten Mittelplattenseite 7 sowie eine weitere (zweite) zwischen der zweiten Außenplatte 6 und der zweiten Mittelplattenseite 8.

Das Etagenspritzgusswerkzeug 3 bzw. die Spritzgussvorrichtung 2 ist derart ausgestaltet, dass die Spritzgussformen bzw. herzustellende IML-Spritzgussteile 11, hier Becher von außen, hier bodenseitig, von der Mittelplatte 4 her anspritzbar sind, so dass sich bei dem fertigen IML-Spritzgussteil 11, hier also einem Becher, der Anspritzpunkt nicht im Becherinneren sondern auf der Außenseite, hier auf der Unterseite des Bodens befindet.

Um solche IML-Spritzgussteile 11 herstellen zu können, müssen in die Form-Matrizen 9 IML-Label eingelegt werden, die dann in einem Bereich zwischen Kern und Form-Matrize 9 aus Richtung der Mittelplatte 4 hinterspritzt werden.

Zu erkennen ist in den Figuren eine Öffnungsachse Ö entlang der die Relativverstellbewegung der Außenplatten 5, 6 und der Mittelplatte 4 realisiert ist. Folglich durchsetzt die Öffnungsachse Ö sowohl die Mittelplatte 4 als auch die Außenplatten 5, 6 zentrisch. Die Öffnungsachse Ö liegt in dem Ausführungsbeispiel einer Horizontalebene. Senkrecht zur Öffnungsachse Ö verläuft eine ebenfalls in der Horizontalebene angeordnete Seitenachse S, die seitlich, d.h. entlang der Öffnungsachse Ö betrachtet mittig durch die Mittelplatte 4 verläuft.

Beabstandet von dem Etagenspritzgusswerkzeug 3 entlang der vorgenannten Seitenachse S befinden sich erste und zweite Magazinmittel M₁, M₂, wobei die ersten Magazinmittel M₁ in etwa auf Höhe der ersten Außenplatte 5 bezogen auf die Öffnungsachse Ö und die zweiten Magazinmittel M₂ auf Höhe der zweiten Außenplatte 6 angeordnet sind, jeweils in einem geöffneten Zustand des Etagenspritzgusswerkzeugs 3. In einem Bereich entlang der Öffnungsachse Ö zwischen den ersten und zweiten Magazinmitteln M₁, M₂ befinden sich eine erste Übernahmeposition Ü₁ und eine zweite Übernahmeposition Ü₂, jeweils entlang der Öffnungsachse Ö von der Seitenachse S beabstandet. An der ersten Übernahmeposition Ü₁ werden gleichzeitig eine Mehrzahl von Labeln 14 von den Magazinmitteln M₁ auf erste Labeltransfermittel 12 übergeben mithilfe einer nicht gezeigten Übergabeeinrichtung, wie diese beispielsweise in der DE 11 2005 002 486 B4 beschrieben ist. Entsprechend werden an der zweiten Übernahmeposition Ü₂ gleichzeitig eine Mehrzahl von Labeln 14 aus den Magazinmittel M₂ auf zweite Labeltransfermittel 13 übergeben. Die ersten und zweiten Labeltransfermittel 12, 13 werden gebildet von gemeinsamen Labeltransfermitteln bzw. einer gemeinsamen Labeltransfereinrichtung, die auf den den Magazinmitteln M₁, M₂ zugewandten Seiten entsprechende, vorzugsweise unterdruckunterstützte, Halteaufnahmen, zum Halten der aus den Magazinmittel M₁, M₂ übernommenen Label 14 aufweisen.

Die ersten und zweiten Labeltransfermittel 12, 13 bzw. die gemeinsame Labeltransfereinrichtung kann/können mittels eines gemeinsamen Antriebs entlang der Seitenachse S verstellt werden, und zwar jeweils auf einer den ersten bzw. zweiten Labeltransfermitteln 12, 13 zugeordneten Labeltransfermittelverstellachse LA_{1,} LA₂, die von der Seitenachse S beabstandet sind und parallel zu dieser verlaufen.

Die Label 14 werden bevorzugt derart übergeben, dass deren Flächenerstreckungsebene zumindest näherungsweise in einer Vertikalebene zum liegen kommt.
In Fig. 3 ist beispielhaft zu erkennen, dass aus jedem der Magazinmittel M₁, M₂ jeweils beispielhaft sechs Label 14 (d.h. ein Labelfeld mit mehreren Labeln 14) gleichzeitig auf die zugehörigen Labeltransfermittel 12, 13 übergeben werden können.

Nach Beladen der ersten und zweiten Labeltransfermittel 12, 13 werden diese also beispielhaft mittels eines gemeinsamen Antriebs entlang sowie auf der vorerwähnten Labeltransfermittelverstellachsen LA_{1,} LA₂ verstellt zu einer ersten bzw. zweiten Labelübergabeposition L₁, L₂, an der die von der Seitenachse S weg weisenden Label 14 mithilfe von als Schwenkeinrichtungen ausgebildeten, ortsfesten ersten und zweiten Labelübergabemitteln LÜ₁, LÜ₂ transferiert bzw. übergeben werden können in Richtung der Öffnungsachse Ö nach außen bzw. von der Seitenachse weg auf Einlegekerne 15 von ersten bzw. zweiten Transfermitteln T₁, T₂. Die Label 14 werden dabei gleichzeitg derart auf die hier beispielhaft konisch verjüngenden Einlegekerne 15 (Dummkerne) übergeben, dass die Label 14 die Einlegekerne 15 zumindest abschnittsweise in deren Umfangsrichtung umgreifen. Dies kann durch entsprechenden Unterdruck an den Einlegekern 15 und/oder elektrostatisch realisiert werden.

Jedenfalls werden die Transfermittel T₁, T₂ nach der Übergabe der Label 14 translatorisch entlang der Seitenachse S konkret auf hierzu parallelen Transfermittelverstellachsen TA₁, TA₂ aus einer zugehörigen Außenposition A_{1,} A₂, die mit der jeweiligen Labelübergabeposition L₁, L₂ der Labeltransfermittel 12, 13 korrespondiert bzw. zu dieser in einer Richtung entlang der Öffnungsachse von der Seitenachse weg benachbart ist zu einer jeweiligen Innenposition I₁, I₂ verstellt, die zwischen der jeweiligen Außenplatte 5 bzw. 6 und der zugehörigen Mittelplattenseite 7, 8 angeordnet ist. Dort werden dann mittels der Transfermittel T₁, T₂ die Label 14 nach innen in die Form-Matrizen 9, d.h. in Richtung Seitenachse S entlang der Öffnungsachse Ö verstellt und die fertigen IML-Spritzgussteile 11, hier Becher, werden von den Kernen 10 der jeweiligen Außenplatte entnommen, woraufhin die Transfermittel T₁, T₂ auf ihren Transfermittelverstellachsen TA₁, TA₂ zurückverstellt werden zur jeweiligen Außenposition A_{1,} A₂, wo die fertigen IML-Spritzgussteile 11 abgelegt bzw. übergeben werden an Aufnahmemittel 17, die in einem Bereich entlang der Seitenachse S zwischen Magazinmitteln M₁, M₂ und dem Etagenspritzgusswerkzeug 3 angeordnet sind. Die Aufnahmemittel 17 umfassen zwei Förderbänder, die in einander entgegensetzte Richtungen fertige IML-Spritzgussteile 11 weg von der Seitenachse S fördern.

In Fig. 1 ist zu erkennen, dass entlang der Längserstreckung der Öffnungsachse Ö die Labeltransfermittelverstellachsen LA₁ und LA₂ zwischen den Transfermittelverstellachsen TA₁ bzw. TA₂ und der Seitenachse S angeordnet sind.

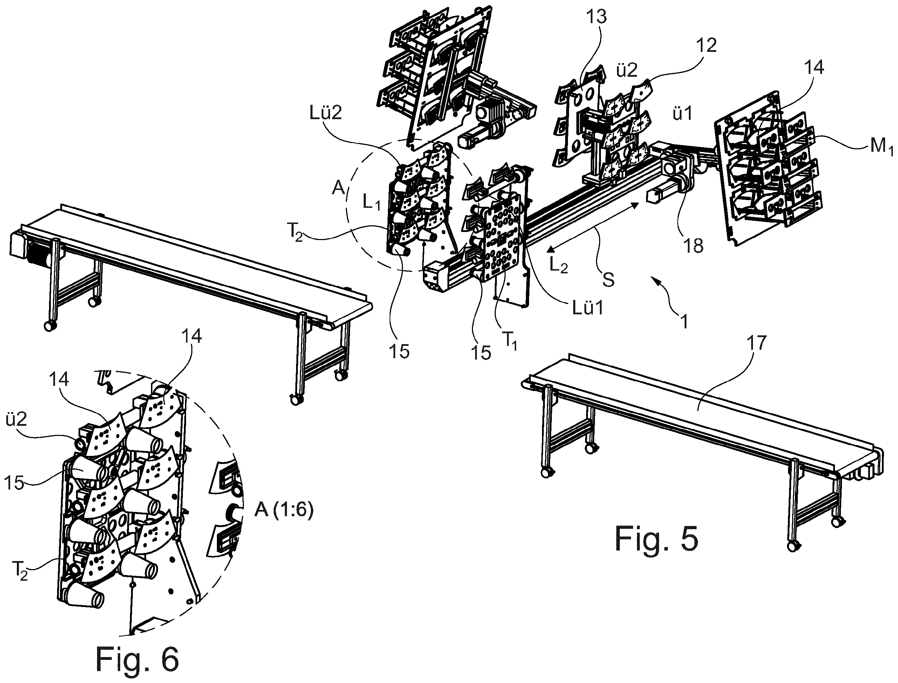

In den Fig. 5 und 6 sind einige Details einer in den Fig. 1 bis 4 sehr schematisch dargestellten Vorrichtung 1 gezeigt, jedoch nicht die vollständige Vorrichtung 1. Zu erkennen sind die mehrere Labelstapel aufweisenden ersten Magazinmittel M₁ sowie ein als Schwenk- und Translationsvorrichtung ausgebildete Übergabeeinrichtung 18 zur gleichzeitigen Übergabe von mehreren, hier sechs Labeln 14 auf erste Labeltransfermittel 13. Gut zu erkennen ist die im Wesentlichen vertikale Ausrichtung der Label 14 auf den ersten Labeltransfermitteln 12. Die ersten Labeltransfermittel 12 und zweite Labeltransfermittel 13, die in voneinander abgewandte Seiten der Seitenachse S orientiert sind, bilden eine gemeinsame Labeltransfereinrichtung die entlang der Seitenachse S verstellbar sind zwischen der in Fig. 5 rechts oben gezeigten Übernahmeposition Ü₁ bzw. Ü₂ und der jeweiligen Labelübergabeposition L₁, L₂. Dort wird von den jeweiligen, in Fig. 5 nicht in der Labelübergabeposition L₁, L₂ dargestellten Labeltransfermittel 12, 13 die Label 14 mithilfe von als Schwenkeinrichtung ausgebildeten Labelübergabemitteln LÜ₁ bzw. LÜ₂ sämtliche Label 14 gleichzeitig transferiert auf Einlegekerne 15 von ersten und zweiten Transfermitteln T₁, T₂, an denen aus Übersichtlichkeitsgründen in den Fig. 5 und 6 nicht Entnahmegreifer zum Entnehmen von fertigen IML-Spritzgussteilen 11 dargestellt sind. Diese befinden sich auf einer von den jeweiligen Einlegekernen 15 abgewandten bzw. der zugehörigen Außenplatte zugewandten Seiten der Transfermittel T₁, T₂.

In Fig. 6 sind eine Vielzahl von Labeln 14 an zweiten Labelübergabemitteln LÜ₂ dargestellt, die um parallel zur Seitenachse S verlaufende Achsen verschwenkbar sind, hier um 90° zuzüglich eines Konuswinkels der becherförmigen Einlegekerne 15 der zweiten Transfermittel T₂.

### Bezugszeichen

- 1: IML-Spritzgussteile-Handhabungsvorrichtung (Vorrichtung)
- 2: Spritzgussvorrichtung
- 3: Etagenspritzgusswerkzeug
- 4: Mittelplatte
- 5: erste Außenplatte
- 6: zweite Außenplatte
- 7: erste Mittelplattenseite
- 8: zweite Mittelplattenseite
- 9: Form-Matrizen (Matrizen, Nester)
- 10: Kern
- 11: IML-Spritzgussteile (Becher)
- 12: erste Labeltransfermittel
- 13: zweite Labeltransfermittel
- 14: Label
- 15: Einlegekerne
- 17: Aufnahmemittel
- 18: Übergabemittel

- Ö: Öffnungsachse
- S: Seitenachse

- A_{1,} A₂: erste bzw. zweite Außenposition
- I₁, I₂: erste bzw. zweite Innenposition
- LA_{1,} LA₂: erste bzw. zweite Labeltransfermittelverstellachse
- L₁, L₂: erste bzw. zweite Labelübergabeposition
- LÜ₁, LÜ₂: erste bzw. zweite Labelübergabemittel
- M₁, M₂: erste bzw. zweite Magazinmittel
- T₁, T₂: erste bzw. zweite Transfermittel
- TA₁, TA₂: erste bzw. zweite Transfermittelverstellachse
- U₁, U₂: erste bzw. zweite Übernahmeposition

## Patentansprüche

1. IML-Spritzgussteile-Handhabungsvorrichtung (1),
- mit einer Spritzgussvorrichtung (2), umfassend ein Etagenspritzgusswerkzeug (3),
o aufweisend eine Mittelplatte (4) mit einer ersten Mittelplattenseite (7) und einer von der ersten Mittelplattenseite (7) abgewandten zweiten Mittelplattenseite (8), jeweils aufweisend eine Mehrzahl von Form-Matrizen (9), die von der Mittelplatte (4) her anspritzbar sind,
o sowie aufweisend eine der ersten Mittelplattenseite (7) zugeordnete und dieser gegenüberliegende erste Außenplatte (5) und eine der zweiten Mittelplattenseite (8) zugeordnete und dieser gegenüberliegende zweite Außenplatte (6),
o wobei die Außenplatten (5, 6) entlang einer, bevorzugt horizontalen, durch die Mittelplatte (4) und die Außenplatten (5, 6) verlaufenden Öffnungsachse (Ö) des Etagenwerkzeugs (3) beabstandet sind und die Mittelplatte (4) zwischen sich aufnehmen,
o und wobei die Außenplatten (5, 6) jeweils mehrere Kerne (10) zum Einführen in die jeweils gegenüberliegenden Form-Matrizen (9) der zugehörigen Mittelplattenseite (7, 8) aufweisen,
- mit entlang einer sich senkrecht zur Öffnungsachse (Ö) erstreckenden, bevorzugt horizontalen, vorzugsweise mittig, durch die Mittelplatte (4) hindurch verlaufenden Seitenachse (S) von dem Etagenwerkzeug (3) beabstandeten ersten und zweiten Magazinmitteln (M₁, M₂), die entlang der Öffnungsachse (Ö) voneinander beabstandet sind, und
- mit entlang der Seitenachse (S) zwischen den Magazinmitteln (M₁, M₂) und dem Etagenwerkzeug (3) angeordneten, bevorzugt als Transportmittel (T₁, T₂) ausgebildete Aufnahmemittel (17) zur Aufnahme von fertigen IML-Spritzgussteilen (11),
- mit zum gleichzeitigen Einlegen von Labeln (14) in die Form-Matrizen (9) der ersten Mittelplattenseite (7) sowie zur Übernahme von fertigen IML-Spritzgussteilen (11) von den Kernen (10) der ersten Außenplatte (5) ausgebildeten, eine Mehrzahl von mit den Form-Matrizen (9) der ersten Mittelplattenseite (7) korrespondierenden Einlegekernen (15) aufweisenden ersten Transfermitteln (T₁), die entlang der Seitenachse (S) zwischen einer ersten Außenposition (A₁) im Bereich der Aufnahmemittel (17) und einer ersten Innenposition (I₁) in einem Öffnungsbereich zwischen der ersten Mittelplattenseite (7) und der ersten Außenplatte (5) verstellbar sind,
- mit zum gleichzeitigen Einlegen von Labeln (14) in die Form-Matrizen (9) der zweiten Mittelplattenseite (8) sowie zur Übernahme von fertigen IML-Spritzgussteilen (11), insbesondere Bechern, von den Kernen (10) der zweiten Außenplatte (6) ausgebildeten, eine Mehrzahl von mit den Form-Matrizen (9) der zweiten Mittelplattenseite (8) korrespondierenden Einlegekernen (15) aufweisenden zweiten Transfermitteln (T₂), die entlang der Seitenachse (S) zwischen einer zweiten Außenposition (A₂) im Bereich der Aufnahmemittel (17) und einer zweiten Innenposition (I₂) in einem Öffnungsbereich zwischen der zweiten Mittelplattenseite (8) und der zweiten Außenplatte (6) verstellbar sind,
- mit ersten Labeltransfermitteln (12), die zur gleichzeitigen Übernahme einer Mehrzahl von Labeln (14) aus den ersten Magazinmitteln (M₁) ausgebildet sind, und die aus einer ersten Übernahmeposition (U1) zwischen den ersten und den zweiten Magazinmitteln (M₁, M₂) entlang der Seitenachse (S) in eine der ersten Außenposition (A₁) entlang der Öffnungsachse (Ö) gegenüberliegende erste Labelübergabeposition (L₁) verstellbar sind,
- mit zweiten Labeltransfermitteln (13), die zur gleichzeitigen Übernahme einer Mehrzahl von Labeln (14) aus den zweiten Magazinmitteln (M₂) ausgebildet sind, und die aus einer zweiten Übernahmeposition (U₂) zwischen den ersten und den zweiten Magazinmitteln (M₁, M₂) entlang der Seitenachse (S) in eine der zweiten Außenposition (A₂) entlang der Öffnungsachse (Ö) gegenüberliegende zweite Labelübergabeposition (L₂) verstellbar sind,
- mit stationär benachbart zur ersten Außenposition (A₁) sowie zur ersten Labelübergabeposition (L₁) angeordneten ersten Labelübergabemittel (LÜ₁) zum Übergeben der Label (14) von den ersten Labeltransfermitteln (12) auf die Einlegekerne (15) der ersten Transfermittel (T₁),
- mit stationär benachbart zur zweiten Außenposition (A₂) sowie zur zweiten Labelübergabeposition (L₂) angeordneten zweiten Labelübergabemittel (LÜ₂) zum Übergeben der Label (14) von den zweiten Labeltransfermitteln (13) auf die Einlegekerne (15) der zweiten Transfermittel (T₂),
**dadurch gekennzeichnet,**
**dass** die Label (14) derart von den ersten Magazinmitteln (M₁) auf die ersten Labeltransfermittel (12) übergebbar und von den ersten Labeltransfermitteln (12) in der ersten Übernahmeposition (U₁) übernehmbar sind, dass eine gemeinsame Flächenerstreckungsebene der auf den ersten Labeltransfermitteln (12) angeordneten Label (14) beim Tranfer von der ersten Übernahmeposition (U₁) bis zur ersten Labelübergabeposition (L₁) gleich oder weniger als 20°, bevorzugt gleich oder weniger als 10°, noch weiter bevorzugt gleich oder weniger als 5° zu einer Vertikalebene geneigt ist oder in einer Vertikalebene liegt und dass die Label (14) derart von den zweiten Magazinmitteln (M₂) auf die zweiten Labeltransfermittel (13) übergebbar und von den zweiten Labeltransfermitteln (13) in der zweiten Übernahmeposition (U₂) übernehmbar sind, dass eine gemeinsame Flächenerstreckungsebene der auf den zweiten Labeltransfermitteln (13) angeordneten Label (14) beim Transfer von der zweiten Übernahmeposition (U₂) bis zur zweiten Labelübergabeposition (L₂) gleich oder weniger als 20°, bevorzugt gleich oder weniger als 10°, noch weiter bevorzugt gleich oder weniger als 5° zu einer Vertikalebene geneigt ist oder in einer Vertikalebene liegt, und dass die ersten und zweiten Labelübergabemittel (LÜ₁, LÜ₂) jeweils als Schwenkmittel ausgebildet sind.

2. IML-Spritzgussteile-Handhabungsvorrichtung nach Anspruch 1,
**dadurch gekennzeichnet,**
**dass** die Label (14) aus den Magazinmittel (M₁, M₂) entlang der Öffnungsachse (Ö) in Richtung der Seitenachse (S) auf die Labeltransfermittel (12, 13) übergebbar sind und dass die Label (14) von den Labeltransfermitteln (12, 13) auf die Transfermittel (T₁,T₂) entlang der Öffnungsachse (Ö) in Richtung von der Seitenachse (S) weg übergebbar sind.

3. IML-Spritzgussteile-Handhabungsvorrichtung nach einem der Ansprüche 1 oder 2,
**dadurch gekennzeichnet,**
**dass** die ersten und die zweiten Transfermittel (T₁, T₂) Hubmittel zum Realisieren eines Entnahmehubs entlang der Öffnungsachse (Ö) zur Entnahme von fertigen IML-Spritzgussteilen (11) von den zugeordneten Kernen (10) der ersten bzw. zweiten Außenplatte (5, 6) und/oder zur Realisierung eines Einlegehubs zum Einlegen der Label (14) in die Form-Matrizen (9) der ersten bzw. zweiten Mittelplattenseite (7, 8) aufweisen.

4. IML-Spritzgussteile-Handhabungsvorrichtung nach einem der vorhergehenden Ansprüche,
**dadurch gekennzeichnet,**
**dass** die ersten und die zweiten Transfermittel (T₁,T₂) mit einem gemeinsamen Antrieb oder mit separaten Antrieben entlang der Seitenachse (S) verstellbar sind und/oder dass die ersten und die zweiten Labeltransfermittel (12, 13) mit separaten Antrieben oder mit einem gemeinsamen Antrieb entlang der Seitenachse (S) verstellbar sind.

5. IML-Spritzgussteile-Handhabungsvorrichtung nach einem der vorhergehenden Ansprüche,
**dadurch gekennzeichnet,**
**dass** ein erste Labeltransfermittelverstellachse (LA₁) entlang der Öffnungsachse (Ö) zwischen einer parallel zur ersten Labeltransfermittelverstellachse (LA₁) sowie parallel zur Seitenachse (S) verlaufenden ersten Transfermittelverstellachse (TA₁) und der Seitenachse (S) angeordnet ist und dass eine zweite Labeltransfermittelverstellachse (LA₂) entlang der Öffnungsachse (Ö) zwischen einer parallel zur zweiten Labeltransfermittelverstellachse (LA₂) sowie parallel zur Seitenachse (S) verlaufenden zweiten Transfermittelverstellachse (TA₂) und der Seitenachse (S) angeordnet ist.

6. IML-Spritzgussteile-Handhabungsvorrichtung nach einem der vorhergehenden Ansprüche,
**dadurch gekennzeichnet,**
**dass** die Aufnahmemittel (17) erste und ein zweite, bevorzugt jeweils ein Förderband umfassende Fördermittel aufweisen, die ausgebildet und angeordnet sind zur Aufnahme der fertigen IML-Spritzgussteile (11) und zum Transport derselben, vorzugsweise in einander entgegengesetzte Richtungen entlang der Öffnungsachse (Ö), weg von der Seitenachse (S).

7. IML-Spritzgussteile-Handhabungsvorrichtung nach einem der vorhergehenden Ansprüche,
**dadurch gekennzeichnet,**
**dass** die ersten und zweiten Labeltransfermittel (12, 13) Haltemittel, insbesondere Unterdrucksaugmittel, zum Halten der von den Magazinmitteln (M₁, M₂) übernommenen Label (14) während der Verstellbewegung zwischen der ersten bzw. zweiten Übernahmeposition (U₁, U₂) und der ersten bzw. zweiten Labelübergabepsotion (L₁, L₂) aufweisen jedoch keine Verschwenk-und/oder Hubmittel zum Verstellen der Hubmittel an den ersten bzw. zweiten Labeltransfermitteln (12, 13).

8. Verfahren zum Betreiben einer IML-Spritzgussteile-Handhabungsvorrichtung (1) nach einem der vorhergehenden Ansprüche, wobei von den in der ersten Übernahmeposition (U₁) befindlichen ersten Labeltransfermitteln (12) gleichzeitig eine Mehrzahl von Labeln (14) aus den ersten Magazinmitteln (M₁) übernommen werden und, bevorzugt gleichzeitig, von den in der zweiten Übernahmeposition (U₂) befindlichen zweiten Labeltransfermitteln (13) gleichzeitig eine Mehrzahl von Labeln (14) aus den zweiten Magazinmitteln (M₂) übernommen werden und dass die ersten und die zweiten Labeltransfermittel (12, 13), bevorzugt gleichzeitig, mit den Labeln (14) an die erste bzw. zweite Labelübergabeposition (L₁, L₂) verstellt werden und dass dort, insbesondere gleichzeitig, mittels der ortsfesten ersten und Labelübergabemittel (LÜ₁, LÜ₂) die Label (14) gemeinsam von den ersten bzw. zweiten Labeltransfermitteln (12, 13) auf die Einlegekerne (15) in der ersten bzw. zweiten Außenposition (A₁, A₂) befindlichen Transfermittel (T₁,T₂), übergeben und dabei um die Einlegekerne (15) herumgeformt werden, und dass dann die ersten und die zweiten Transfermittel (T₁, T₂) entlang der Seitenachse (S) zur ersten bzw. zweiten Innenposition (I₁, I₂) verstellt werden und dort die Label (14) in die Form-Matrizen (9) der ersten bzw. zweiten Mittelplattenseite (7, 8) eingelegt und die fertigen IML-Spritzgussteile (11) von einem vorhergehenden Schuss von den Kernen (10) der ersten bzw. zweiten Außenplatte (5, 6) übernommen werden und danach die ersten und zweiten Transfermittel (T₁, T₂) zurück zur ersten bzw. zweiten Außenposition (A₁, A₂) verstellt werden, an denen die fertigen IML-Spritgussteile (11) an die Aufnahmemittel (17) übergeben werden,
**dadurch gekennzeichnet,**
**dass** eine gemeinsame Flächenerstreckungsebene der Label (14) auf den ersten Labeltransfermitteln (12) während der gesamten Verstellbewegung von der ersten Übernahmeposition (U₁) bis zur ersten Labelübergabeposition (L₁) weniger als 20°, bevorzugt weniger als 10°, noch weiter bevorzugt weniger als 5° zu einer Vertikalebene geneigt ist oder in einer Vertikalebene liegt, und dass eine gemeinsame Flächenerstreckungsebene der Label (14) auf den zweiten Labeltransfermitteln (13) während der gesamten Verstellbewegung von der zweiten Übernahmeposition (U₂) bis zur zweiten Labelübergabeposition (L₂) weniger als 20°, bevorzugt weniger als 10°, noch weiter bevorzugt weniger als 5° zu einer Vertikalebene geneigt ist oder in einer Vertikalebene liegt, und dass die Label aus ihrer Orientierung mittels der jeweils als Schwenkmittel ausgebildeten ersten und zweiten Labelübergabemittel (LÜ₁, LÜ₂) verschwenkt werden.

9. Verfahren nach Anspruch 8,
**dadurch gekennzeichnet,**
**dass** als IML-Spritzgussteile (11) Becher hergestellt werden, aufweisend einen Boden und eine einteilig mit dem Boden ausgebildete, sich vorzugsweise konisch in Richtung einer Einfüllöffnung in ihrem Durchmesser verbreiternden, Umfangswand.

## Claims

1. A handling device (1) for IML injection-molded parts,
- having an injection molding device (2), comprising a stack injection mold (3),
∘ comprising a center plate (4) having a first center plate side (7) and a second center plate side (8) facing away from the first center plate side (7), each comprising a plurality of mold dies (9) which can be molded from the center plate (4),
∘ and comprising a first outer plate (5) assigned to the first center plate side (7) and opposite thereto and a second outer plate (6) assigned to the second center plate side (8) and opposite thereto,
∘ the outer plates (5, 6) being spaced apart along a, preferably horizontal, opening axis (Ö) of the stack injection mold (3) running through the center plate (4) and the outer plates (5, 6) and the outer plates (5, 6) accommodating the center plate (4) between them,
∘ and the outer plates (5, 6) each having several cores (10) for the insertion into the opposite mold dies (9) of the corresponding center plate sides (7, 8)
- having a, preferably horizontal, lateral axis (S) extending perpendicularly to the opening axis (Ö), and running, preferably centrally, through the center plate (4) of first and second depot means (M₁, M₂) which are spaced apart from the stack injection mold (3) and which are spaced apart from one another along the opening axis (Ö), and
- having accommodation means (17) for accommodating finished IML injection-molded parts (11), said accommodation means (17) being disposed between the depot means (M₁, M₂) and the stack injection mold (3) along the lateral axis (S) and being preferably realized as transport means (T₁, T₂),
- having first transport means (T₁) realized for the simultaneous insertion of labels (14) into the mold dies (9) of the first center plate side (7) and realized for transferring finished IML injection-molded parts (11) from the cores (10) of the first outer plate (5), said first transport means (T₁) having a plurality of insertion cores (15) corresponding to the mold dies (9) of the first center plate side (7), the first transport means (T₁) being displaceable along the lateral axis (S) between a first outer position (A₁) in the area of the accommodation means (17) and a first inner position (I₁) in an opening area between the first center plate side (7) and the first outer plate (5),
- having second transport means (T₂) realized for the simultaneous insertion of labels (14) into the mold dies (9) of the second center plate side (8) and realized for transferring finished IML injection-molded parts (11), in particular cups, from the cores (10) of the second outer plate (6), said second transport means (T₂) having a plurality of insertion cores (15) corresponding to the mold dies (9) of the second center plate side (8), the second transport means (T₂) being displaceable along the lateral axis (S) between a second outer position (A₂) in the area of the accommodation means (17) and a second inner position (I₂) in an opening area between the second center plate side (8) and the second outer plate (6),
- having first label transfer means (12) realized for the simultaneous transfer of a plurality of labels (14) from the first depot means (M₁) and being displaceable from a first transfer position (U₁) between the first and the second depot means (M₁, M₂) along the lateral axis (S) into a first label delivery position (L₁) opposite to the first outer position (A₁) along the opening axis (Ö),
- having second label transfer means (13) realized for the simultaneous transfer of a plurality of labels (14) from the second depot means (M₂) and being displaceable from a second transfer position (U₂) between the first and the second depot means (M₁, M₂) along the lateral axis (S) into a second label delivery position (L₂) opposite to the second outer position (A₂) along the opening axis (Ö)
- having first label delivery means (LÜ₁) for delivering the labels (14) from the first label transfer means (12) onto the insertion cores (15) of the first transfer means (T₁), said first label delivery means (LÜ₁) being disposed adjacent to the first outer position (A₁) and to the first label delivery position (L₁) in a stationary manner,
- having second label delivery means (LÜ₂) for delivering the labels (14) from the second label transfer means (13) onto the insertion cores (15) of the second transfer means (T₂), said second label delivery means (LÜ₂) being disposed adjacent to the second outer position (A₂) and to the second label delivery position (L₂) in a stationary manner,
**characterized in that**
the labels (14) can be delivered from the first depot means (M₁) onto the first label transfer means (12) and transferred by the first label transfer means (12) in the first transfer position (U₁) in such a manner that a common surface extension plane of the labels (14) disposed on the first label transfer means (12) is inclined to an angle equal to or less than 20°, preferably equal to or less than 10°, more preferably equal to or less than 5° to a vertical plane or is in a vertical plane when the labels (14) are transferred from the first transfer position (U₁) to the first label delivery position (L₁) and that the labels (14) can be delivered from the second depot means (M₂) onto the second label transfer means (13) and transferred by the second label transfer means (13) in the second transfer position (U₂) in such a manner that a common surface extension plane of the labels (14) disposed on the second label transfer means (13) is inclined to an angle equal to or less than 20°, preferably equal to or less than 10°, more preferably equal to or less than 5° to a vertical plane or is in a vertical plane when the labels (14) are transferred from the second transfer position (U₂) to the second label delivery position (L₂), and that the first and second label delivery means (LÜ₁, LÜ₂) are each realized as pivot means.

2. The handling device for IML injection-molded parts according to claim 1,
**characterized in that**
the labels (14) can be delivered from the depot means (M₁, M₂) along the opening axis (Ö) in the direction of the lateral axis (S) onto the label transfer means (12, 13) and that the labels (14) can be delivered from the label transfer means (12, 13) onto the transfer means (T₁, T₂) in a direction away from the lateral axis (S).

3. The handling device for IML injection-molded parts according to claim 1 or 2,
**characterized in that**
the first and the second transfer means (T₁, T₂) have lifting means for realizing a removal lift along the opening axis (Ö) for removing finished IML injection-molded parts (11) from the assigned cores (10) of the first or second outer plate (5, 6) and/or for realizing an insertion lift for inserting the labels (14) into the mold dies (9) of the first or second center plate side (7, 8).

4. The handling device for IML injection-molded parts according to any one of the preceding claims,
**characterized in that**
the first and the second transfer means (T₁, T₂) can be displaced along the lateral axis (S) by means of a common drive or by means of separate drives and/or that the first and the second label transfer means (12, 13) can be displaced along the lateral axis (S) by means of separate drives or by means of a common drive.

5. The handling device for IML injection-molded parts according to any one of the preceding claims,
**characterized in that**
a first displacement axis of the label transfer means (LA₁) is disposed along the opening axis (Ö) between a first displacement axis of the transfer means (TA₁) which extends in parallel to the first displacement axis of the label transfer means (LA₁) and in parallel to the lateral axis (S) and the lateral axis (S), and that a second displacement axis of the label transfer means (LA₂) is disposed along the opening axis (Ö) between a second displacement axis of the transfer means (TA₂) which extends in parallel to the second displacement axis of the label transfer means (LA₂) and in parallel to the lateral axis (S) and the lateral axis (S).

6. The handling device for IML injection-molded parts according to any one of the preceding claims,
**characterized in that**
the accommodation means (17) have first and second conveyor means, preferably comprising a conveyor belt, which are realized and disposed for accommodating the finished IML injection-molded parts (11) and for transporting said finished injection-molded parts away from the lateral axis (S), preferably in opposite directions along the opening axis (Ö).

7. The handling device for IML injection-molded parts according to any one of the preceding claims,
**characterized in that**
the first and second label transfer means (12, 13) have support means, in particular negative pressure suction means, for supporting the labels transferred by the depot means (M₁, M₂) during the displacement movement between the first or second transfer position (U₁, U₂) and the first or second label delivery position (L₁, L₂), but that the first and second label transfer means (12, 13) do not have pivot and/or lifting means for displacing the lifting means at the first or second label transfer means (12, 13).

8. A method for operating a handling device (1) for IML injection-molded parts according to any one of the preceding claims, a plurality of labels (14) being simultaneously transferred from the first depot means (M₁) by the first label transfer means (12) in the first transfer position (U₁) and, preferably simultaneously, a plurality of labels (14) being simultaneously transferred from the second depot means (M₂) by the second label transfer means (13) in the second transfer position (U₂), and that the first and the second label transfer means (12, 13)and the labels (14) are, preferably simultaneously, displaced towards the first or second label delivery position (L₁, L₂), and that the labels (14) are, in particular simultaneously, delivered jointly by means of the stationary first and second label delivery means (LÜ₁, LÜ₂) from the first or second label transfer means (12, 13) onto the insertion cores (15) in the first or second outer position (A₁, A₂) of the transfer means (T₁, T₂) and that the labels (14) are formed around the insertion cores (15), and that the first and the second transfer means (T₁, T₂) are then displaced towards the first or second inner position (I₁, I₂) along the lateral axis (S) and that the labels (14) are inserted into the mold dies (9) of the first or second center plate side (7, 8) and that the finished IML injection-molded parts (11) are transferred by the cores (10) of the first or second outer plate (5, 6) and that the first and second transfer means (T₁, T₂) are then displaced back to the first or second outer position (A₁, A₂), the finished IML injection-molded parts (11) being delivered to the accommodation means (17) at said outer positions (A₁, A₂),
**characterized in that**
a common surface extension plane of the labels (14) disposed on the first label transfer means (12) is inclined to an angle of less than 20°, preferably less than 10°, more preferably less than 5° to a vertical plane or is in a vertical plane when the labels (14) are displaced from the first transfer position (U₁) to the first label delivery position (L₁), and that a common surface extension plane of the labels (14) disposed on the second label transfer means (13) is inclined to an angle of less than 20°, preferably less than 10°, more preferably less than 5° to a vertical plane or is in a vertical plane when the labels (14) are displaced from the second transfer position (U₂) to the second label delivery position (L₂), and that the labels are pivoted by means of the first and second label delivery means (LÜ₁, LÜ₂) which are realized as pivot means.

9. The method according to claim 8,
**characterized in that**
cups are produced as IML injection-molded parts (11), said cups having a bottom and a circumferential wall realized in one piece with the bottom and the diameter of said circumferential wall broadening, preferably in a conical manner, in the direction of an insertion opening.

## Revendications

1. Dispositif de manutention (1) pour les pièces moulées par injection IML,
- ayant un dispositif de moulage par injection (2), comprenant un moule à étages (3),
∘ comprenant un plateau central (4) ayant un premier côté de plateau central (7) et un deuxième côté de panneau central (8) opposé au premier côté de panneau central (7), chaque côté ayant une pluralité de matrices de moulage (9) qui peuvent être injectées du plateau central (4),
∘ et comprenant un premier plateau extérieur (5) qui est assigné au premier côté de plateau central (7) et qui est opposé audit premier côté de plateau central (7) et comprenant un deuxième plateau extérieur (6) qui est assigné au deuxième côté de plateau central (8) et qui est opposé audit deuxième côté de plateau central (8),
∘ les plateaux extérieurs (5, 6) étant espacés le long d'un axe d'ouverture (Ö),de préférence horizontal, du moule à étages (3) et recevant le plateau central (4) entre eux, l'axe d'ouverture (Ö) traversant le plateau central (4) et les plateaux extérieurs (5, 6),
∘ et les plateaux extérieurs (5, 6) ayant plusieurs noyaux (10) pour l'insertion dans les matrices de moulage (9) opposées du côté de plateau central (7, 8) correspondant,
- ayant un axe latéral (S), de préférence horizontal, qui s'étend perpendiculairement à l'axe d'ouverture (Ö) et qui traverse le plateau central (4), de préférence de manière centrale, des moyens de magasin (M₁, M₂) qui sont espacés du moule à étages (3) et qui sont espacés l'un de l'autre le long de l'axe d'ouverture (Ö), et
- ayant des moyens de réception (17), de préférence réalisés comme moyens de transport (T₁, T₂), pour recevoir des pièces moulées par injection IML (11) finales, les moyens de réception (17) étant disposés le long de l'axe latéral (S) entre les moyens de magasin (M₁, M₂) et le moule à étages (3),
- ayant des premiers moyens de transfert (T₁) réalisés pour l'insertion simultanée des labels (14) dans les matrices de moulage (9) du premier côté de plateau central (7) et réalisés afin de transférer des pièces moulées par injection IML (11) finales des noyaux (10) du premier plateau extérieur (5), les premiers moyens de transfert (T₁) ayant une pluralité de noyaux d'insertion (15) qui correspondent aux matrices de moulage (9) du premier côté de plateau central (7), lesdits premiers moyens de transfert (T₁) étant déplaçables le long de l'axe latéral (S) entre une première position extérieure (A₁) dans la zone des moyens de réception (17) et une première position intérieure (I₁) dans une zone d'ouverture entre le premier côté de plateau central (7) et le premier plateau extérieur (5),
- ayant des deuxièmes moyens de transfert (T₂) réalisés pour l'insertion simultanée des labels (14) dans les matrices de moulage (9) du deuxième côté de plateau central (8) et réalisés afin de transférer des pièces moulées par injection IML (11) finales, notamment des gobelets, des noyaux (10) du deuxième plateau extérieur (6), les deuxièmes moyens de transfert (T₂) ayant une pluralité de noyaux d'insertion (15) qui correspondent aux matrices de moulage (9) du deuxième côté de plateau central (8), lesdits deuxièmes moyens de transfert (T₂) étant déplaçables le long de l'axe latéral (S) entre une deuxième position extérieure (A₂) dans la zone des moyens de réception (17) et une deuxième position intérieure (I₂) dans une zone d'ouverture entre le deuxième côté de plateau central (8) et le deuxième plateau extérieur (6),
- ayant des premiers moyens de transfert de labels (12) qui sont réalisés pour un transfert simultané d'une pluralité de labels (14) des premiers moyens de magasin (M₁) et qui sont déplaçables d'une première position de transfert (U₁) entre les premiers et les deuxièmes moyens de magasins (M₁, M₂) le long de l'axe latéral (S) dans une première position de transmission de labels (L₁) qui est opposée à la première position extérieure (A₁) le long de l'axe d'ouverture (Ö),
- ayant des deuxièmes moyens de transfert de labels (13) qui sont réalisés pour un transfert simultané d'une pluralité de labels (14) des deuxièmes moyens de magasin (M₂) et qui sont déplaçables d'une deuxième position de transfert (U₂) entre les premiers et les deuxièmes moyens de magasins (M₁, M₂) le long de l'axe latéral (S) dans une deuxième position de transmission de labels (L₂) qui est opposée à la deuxième position extérieure (A₂) le long de l'axe d'ouverture (Ö),
- ayant des premiers moyens de transmission de labels (LÜ₁) pour transmettre les labels (14) des premiers moyens de transfert de labels (12) aux noyaux d'insertion (15) des premiers moyens de transfert (T₁), lesdits premiers moyens de transmission de labels (LÜ₁) étant disposés de manière stationnaire et adjacents à la première position extérieure (A₁) et à la première position de transmission de labels (L₁),
- ayant des deuxièmes moyens de transmission de labels (LÜ₂) pour transmettre les labels (14) des deuxièmes moyens de transfert de labels (13) aux noyaux d'insertion (15) des deuxièmes moyens de transfert (T₂), lesdits deuxièmes moyens de transmission de labels (LÜ₂) étant disposés de manière stationnaire et adjacents à la deuxième position extérieure (A₂) et à la deuxième position de transmission de labels (L₂),
**caractérisé en ce que**
les labels (14) peuvent être transmises des premiers moyens de magasin (M₁) aux premiers moyens de transfert de labels (12) et peuvent être transférés par les premiers moyens de transfert de labels (12) dans la première position de transfert (U₁) de telle manière qu'un plan d'extension de surface commun des labels (14) qui sont disposés sur les premiers moyens de transfert de labels (12) est incliné d'un angle égal ou inférieur à 20°, de préférence égal ou inférieur à 10°, plus préférentiellement égal ou inférieur à 5° par rapport à un plan vertical ou le plan d'extension de surface commun est dans un plan vertical quand les labels (14) sont transférés de la première position de transfert (U₁) à la première position de transmission de labels (L₁), et que les labels (14) peuvent être transmises des deuxièmes moyens de magasin (M₂) aux deuxièmes moyens de transfert de labels (13) et peuvent être transférés par les deuxièmes moyens de transfert de labels (13) dans la deuxième position de transfert (U₂) de telle manière qu'un plan d'extension de surface commun des labels (14) qui sont disposés sur les deuxièmes moyens de transfert de labels (13) est incliné d'un angle égal ou inférieur à 20°, de préférence égal ou inférieur à 10°, plus préférentiellement égal ou inférieur à 5° par rapport à un plan vertical ou le plan d'extension de surface commun est dans un plan vertical quand les labels (14) sont transférés de la deuxième position de transfert (U₂) à la deuxième position de transmission de labels (L₂), et que les premiers et les deuxièmes moyens de transmission de labels (LÜ₁, LÜ₂) sont réalisés comme moyens de pivotement.

2. Dispositif de manutention pour les pièces moulées par injection IML selon la revendication 1,
**caractérisé en ce que**
les labels (14) peuvent être transmises des moyens de magasin (M₁, M₂) le long de l'axe d'ouverture (Ö) dans la direction de l'axe latéral (S) aux moyens de transfert de labels (12, 13) et que les labels (14) peuvent être transmises des moyens de transfert de labels (12, 13) aux moyens de transfert (T₁, T₂) le long de l'axe d'ouverture (Ö) dans la direction opposée de l'axe latéral (S).

3. Dispositif de manutention pour les pièces moulées par injection IML selon la revendication 1 ou la revendication 2,
**caractérisé en ce que**
les premiers et les deuxièmes moyens de transfert (T₁, T₂) ont des moyens de levage afin de réaliser une course d'enlèvement le long de l'axe d'ouverture (Ö) pour enlever les pièces moulées par injection IML (11) finales des noyaux (10) assignés du premier ou du deuxième plateau extérieur (5, 6) et/ou afin de réaliser une course d'insertion pour insérer les labels (14) dans les matrices de moulage (9) du premier ou du deuxième côté de plateau central (7, 8).

4. Dispositif de manutention pour les pièces moulées par injection IML selon l'une quelconque des revendications précédentes,
**caractérisé en ce que**
les premiers et les deuxièmes moyens de transfert (T₁, T₂) peuvent être déplacés le long de l'axe latéral (S) au moyen d'un entraînement commun ou au moyens des entraînements distincts et/ou que les premiers et les deuxièmes moyens de transfert de labels (12, 13) peuvent être déplacés le long de l'axe latéral (S) au moyen des entraînements distincts ou au moyen d'un entraînement commun.

5. Dispositif de manutention pour les pièces moulées par injection IML selon l'une quelconque des revendications précédentes,
**caractérisé en ce**
**qu'**un premier axe de déplacement des moyens de transfert de labels (LA₁) est disposé le long de l'axe d'ouverture (Ö) entre un premier axe de déplacement des moyens de transfert (TA₁), qui s'étend parallèlement au premier axe de déplacement des moyens de transfert de labels (LA₁) et parallèlement à l'axe latéral (S), et l'axe latéral (S) et qu'un deuxième axe de déplacement des moyens de transfert de labels (LA₂) est disposé le long de l'axe d'ouverture (Ö) entre un deuxième axe de déplacement des moyens de transfert (TA₂), qui s'étend parallèlement au deuxième axe de déplacement des moyens de transfert de labels (LA₂) et parallèlement à l'axe latéral (S), et l'axe latéral (S).

6. Dispositif de manutention pour les pièces moulées par injection IML selon l'une quelconque des revendications précédentes,
**caractérisé en ce que**
les moyens de réception (17) ont des premiers et des deuxièmes moyens de convoyage qui comprennent, de préférence, un convoyeur et qui sont réalisés et disposés afin de recevoir les pièces moulées par injection (11) finales et afin de transporter lesdites pièces moulées par injection (11), de préférence dans des directions opposées l'une à l'autre le long de l'axe d'ouverture (Ö), à l'opposé de l'axe latéral (S).

7. Dispositif de manutention pour les pièces moulées par injection IML selon l'une quelconque des revendications précédentes,
**caractérisé en ce que**
les premiers et les deuxièmes moyens de transfert de labels (12, 13) ont des moyens de support, notamment des moyens d'aspiration à dépression, pour supporter les labels (14) qui sont transférés par les moyens de magasin (M₁, M₂) pendant le mouvement de déplacement entre la première ou deuxième position de transfert (U₁, U₂) et la première ou deuxième position de transmission de labels (L₁, L₂), mais les premiers et les deuxièmes moyens de transfert de labels (12, 13) n'ont pas des moyens de pivotement et/ou de levage pour déplacer les moyens de levage aux premiers ou deuxièmes moyens de transfert de labels (12, 13).

8. Procédé de fonctionnement d'un dispositif de manutention (1) pour les pièces moulées par injection IML selon l'une quelconque des revendications précédentes, une pluralité de labels (14) étant simultanément transférée des premiers moyens de magasin (M₁) par les premiers moyens de transfert de labels (12) dans la première position de transfert (U₁) et, de préférence simultanément, une pluralité de labels (14) étant simultanément transférée des deuxièmes moyens de magasin (M₂) par les deuxièmes moyens de transfert de labels (13) dans la deuxième position de transfert (U₂), et que les premiers et les deuxièmes moyens de transfert de labels (12, 13) sont déplacés, de préférence simultanément, à la première ou la deuxième position de transmission de labels (L₁, L₂), et que les labels (14) sont transmises, notamment simultanément, au moyen des premiers et deuxièmes moyens de transmission de labels (LÜ₁, LÜ₂) stationnaires des premiers ou des deuxièmes moyens de transfert de labels (12, 13) aux noyaux d'insertion (15) dans la première ou deuxième position extérieure (A₁, A₂) des moyens de transfert (T₁, T₂) et que les labels (14) sont moulés autour les noyaux d'insertion (15), et que les premiers et les deuxièmes moyens de transfert (T₁, T₂) sont déplacés vers la première ou deuxième position intérieure (I₁, I₂) le long de l'axe latéral (S) et que les labels (14) sont insérés dans les matrices de moulage (9) du premier ou du deuxième côté de plateau central (7, 8) et que les pièces moulées par injection IML (11) finales sont transférés par les noyaux (10) du premier ou du deuxième plateau extérieur (5, 6), et que les premiers et les deuxièmes moyens de transfert (T₁, T₂) retournent à la première ou deuxième position extérieure (A₁, A₂) dans laquelle les pièces moulées par injection IML (11) finales sont transmises aux moyens de réception (17),
**caractérisé en ce**
**qu'**un plan d'extension de surface commun des labels (14) qui sont disposés sur les premiers moyens de transfert de labels (12) est incliné d'un angle inférieur à 20°, de préférence inférieur à 10°, plus préférentiellement inférieur à 5° par rapport à un plan vertical ou le plan d'extension de surface commun est dans un plan vertical, et qu'un plan d'extension de surface commun des labels (14) qui sont disposés sur les deuxièmes moyens de transfert de labels (13) est incliné d'un angle inférieur à 20°, de préférence inférieur à 10°, plus préférentiellement inférieur à 5° par rapport à un plan vertical ou le plan d'extension de surface commun est dans un plan vertical, et que les labels sont pivotés de leur orientation au moyens des premiers et deuxièmes moyens de transmission de labels (LÜ₁, LÜ₂) qui sont réalisés comme moyens de pivotement.

9. Procédé selon la revendication 8,
**caractérisé en ce que**
des gobelets sont réalisés comme pièces moulées par injection IML (11), lesdits gobelets ayant un fond et une paroi circonférentielle qui est réalisée en une seule pièce avec le fond, le diamètre de la paroi circonférentielle s'élargissant, de préférence de manière conique, dans la direction d'une ouverture d'insertion.
